# DEMANDE DE BREVET EUROPEEN

(11) **EP 2 677 730 A1**
(43) Date de publication de la demande: **25.12.2013**
(21) Numéro de dépôt: 12004716.2
(22) Date de dépôt: 22.06.2012
(51) Int. Cl.: H04N 1/405, H04N 1/52, B41J 2/21

(54) **Procédé d'impression d'une matrice de pixels de couleurs sur un médium physique par impression de lignes obliques, et dispositif de contrôle associé**

(71) Demandeur: Gemalto SA, 92190 Meudon (FR)
(72) Inventeur: Lesur, Jean-Luc, 92190 Meudon (FR)
(74) Mandataire: Cour, Pierre

(57) **Abrégé**

Un procédé est destiné à permettre l'impression d'une matrice (MPC), de pixels, présentant N couleurs définissant un système de codage de couleurs, sur une partie choisie d'un médium physique (MP). Ce procédé comprend une étape dans laquelle on imprime en au moins un passage des pixels de couleur suivant des lignes obliques par rapport au médium physique (MP), les pixels d'une ligne oblique présentant tous une même couleur choisie parmi les N couleurs et différente de celle utilisée pour la ligne oblique précédente, afin de générer une matrice (MPC) de M lignes horizontales comprenant chacune P pixels présentant les N couleurs successivement selon un ordre choisi, et dans laquelle chaque ligne horizontale autre que la première comprend un premier pixel identique au deuxième pixel de la ligne horizontale précédente.

## Description

### Domaine technique de l'invention

L'invention concerne le domaine de l'impression, et plus précisément l'impression de matrices de pixels sur des média physiques.

On entend ici par « médium physique » tout type de support sur lequel peut être au moins imprimée une matrice de pixels, éventuellement dans le but de permettre une personnalisation ultérieure. Il pourra donc s'agir d'une feuille ou carte en matière plastique ou synthétique, ou en carton, ou encore en papier

Par ailleurs, on entend ici par « personnalisation » le fait d'adjoindre à un médium physique des signes alphanumériques et/ou une reproduction d'une photographie et/ou d'autres éléments graphiques afin qu'il(s) constitue(nt) un/des signes distinctifs

### Etat de l'art

Comme le sait l'homme de l'art, il a été proposé, notamment dans le document brevet WO 2011/045180, de définir sur une partie choisie d'un médium physique, comme par exemple un substrat en matière plastique, une matrice de M*P pixels présentant N couleurs (éventuellement primaires) définissant un système de codage de couleurs.

On entend ici par « système de codage de couleurs » un ensemble de N couleurs (éventuellement primaires) qui permettent de définir n'importe quelle couleur visible lorsqu'on les combine entre elles. A titre d'exemples non limitatifs, il pourra s'agir du système dit RVB (Rouge, Vert, Bleu), ou en anglais RGB (« Red, Green, Blue »), ou du système dit JMC (Jaune, Magenta, Cyan), ou en anglais YMC (« Yellow, Magenta, Cyan »), ou bien d'un système dit JMCRVB (Jaune, Magenta, Cyan, Rouge, Vert, Bleu), ou en anglais YMCRGB (« Yellow, Magenta, Cyan, Red, Green, Blue »).

La matrice comprend M lignes « horizontales » comportant chacune P pixels qui présentent les N couleurs (éventuellement primaires) successivement selon un ordre choisi (par exemple rouge (R) puis Vert (V) puis bleu (B)), avec une éventuelle répétition de cet ordre lorsque P est supérieur à N (par exemple R V B R V B R V B). Par ailleurs, chaque ligne horizontale autre que la première comprend un premier pixel dont la couleur est identique à celle du deuxième pixel de la ligne précédente. C'est ce que l'on appelle une matrice à décalage de ligne.

Ce type de matrice constitue un diagramme ou une mire qui est destiné(e) à participer à la définition d'une image en couleurs, par exemple d'un visage. En fait, une fois que la matrice a été imprimée sur le médium physique, par exemple par jets d'encre, on peut déposer au-dessus d'elle une première couche photosensible transparente (par exemple en polycarbonate dopé), propre à être altérée sélectivement par un premier laser (par exemple de type UV à 355 nm ou UV vert à 532 nm) pour devenir localement blanc opaque en des endroits prédéfinis, puis on peut déposer au-dessus de la première couche photosensible transparente une seconde couche photosensible transparente (par exemple en polycarbonate dopé carbone), propre à être altérée sélectivement par un second laser (par exemple de type Nd-YAG à 1064 nm) pour devenir localement noire opaque (ou en niveaux de gris) en des endroits prédéfinis. On génère ensuite au moins un masque d'exposition à partir du fichier de données numériques qui définit l'image devant personnaliser le médium physique, puis on place chaque masque d'exposition très précisément au-dessus de la seconde couche photosensible opaque, et on expose l'ensemble successivement sous la lumière fournie par le premier laser puis sous la lumière fournie par le second laser afin de générer sur le médium physique une reproduction de l'image. On pourra également et avantageusement utiliser un système de balayage à tête galvanométrique qui permet de distribuer l'ensemble des impulsions lasers à diverses positions correspondant aux emplacements où le(s) masque(s) doivent laisser passer les lumières fournies par les lasers.

Un des inconvénients de cette méthode réside dans le mode de réalisation de la matrice de pixels. En effet, cette dernière peut être réalisée par des têtes d'impression de différentes couleurs qui ne sont pas situées à la même position sur le chemin du support, ce qui provoque de légères erreurs de positionnement des pixels les uns par rapport aux autres du fait de leurs combinaisons d'encres différentes pour définir les différentes couleurs qu'il faut gérer pixel par pixel. Ces erreurs sont généralement dues à l'alignement des têtes d'impressions, et/ou la vitesse relative non constante du support sous ses têtes d'impression, et/ou les jeux mécaniques de transport du support, et/ou la vitesse d'éjection des gouttes d'encre dans le cas d'un système d'impression à jets d'encres (à titre purement indicatif et donc non limitatif). Or, ces erreurs de positionnement peuvent induire des superpositions partielles de pixels voisins de couleurs différentes et donc des défauts d'uniformité des N couleurs (éventuellement primaires) sur l'ensemble de la matrice.

En outre, en raison de ces erreurs de positionnement des pixels de couleurs de la matrice, les pixels de différents niveaux de gris et les pixels blancs (ou transparents) qui sont générés lors de la phase d'altération respectivement dans les première et seconde couches photosensibles au-dessus des pixels de couleurs correspondant, ne seront pas également bien positionnés sur ces derniers, ce qui induit sur l'image reproduite des erreurs locales d'intensité et/ou de contraste et/ou de teinte qui dégradent la qualité perçue par une apparition d'effet de moirage ou d'autres effets colorimétriques. Cette dégradation est de plus accentuée du fait que les étapes de génération des pixels de différents niveaux de gris et des pixels transparents sont également réalisées ligne horizontale après ligne horizontale par translation horizontale puis verticale des moyens d'altération (lasers) par rapport au médium physique, et donc provoque de légères erreurs de positionnement mais qui ne peuvent excéder 20% de la taille des pixels de couleurs afin de limiter la dégradation de la qualité de l'image produite.

### Résumé de l'invention

L'invention a donc pour but d'améliorer la situation.

Elle propose notamment à cet effet un procédé destiné à permettre l'impression d'une matrice de M*P pixels, présentant N couleurs définissant un système de codage de couleurs, sur une partie choisie d'un médium physique.

Ce procédé se caractérise par le fait qu'il comprend une étape dans laquelle on imprime sur la partie choisie en au moins un passage des pixels de couleur suivant des lignes obliques par rapport au médium physique, les pixels d'une ligne oblique présentant tous une même couleur choisie parmi les N couleurs et différente de celle utilisée pour la ligne oblique précédente, afin de générer une matrice de M lignes horizontales comprenant chacune P pixels présentant les N couleurs successivement selon un ordre choisi, avec une éventuelle répétition de cet ordre lorsque P est supérieur à N, et dans laquelle chaque ligne horizontale autre que la première comprend un premier pixel identique au deuxième pixel de la ligne horizontale précédente.

Le procédé selon l'invention peut comporter d'autres caractéristiques qui peuvent être prises séparément ou en combinaison, et notamment :
- on peut prévoir une étape préliminaire dans laquelle on désoriente le médium physique d'un angle choisi de manière à constituer la matrice selon des lignes obliques inclinées de l'angle choisi et dans chacune desquelles tous les pixels présentent une même couleur ;
- on peut effectuer les impressions par jets d'encre ou par offset ;
- le système de codage de couleurs peut être choisi parmi (au moins) le système (Rouge, Vert, Bleu), le système (Jaune, Magenta, Cyan), et une combinaison des deux systèmes précédents ;
- le système de codage de couleurs peut être choisi dans un groupe comprenant plusieurs couleurs relatives à l'espace de couleurs désiré.

L'invention propose également un dispositif dédié au contrôle d'un système d'impression pour l'impression d'une matrice de M*P pixels, présentant N couleurs définissant un système de codage de couleurs, sur une partie choisie d'un médium physique.

Ce dispositif se caractérise par le fait qu'il est agencé pour ordonner au système d'impression d'imprimer sur cette partie choisie en au moins un passage des pixels de couleur suivant des lignes obliques par rapport au médium physique, les pixels d'une ligne oblique présentant tous une même couleur choisie parmi les N couleurs et différente de celle utilisée pour la ligne oblique précédente, afin de générer une matrice de M lignes horizontales comprenant chacune P pixels présentant les N couleurs successivement selon un ordre choisi, avec une éventuelle répétition de cet ordre lorsque P est supérieur à N, et dans laquelle chaque ligne horizontale autre que la première comprend un premier pixel identique au deuxième pixel de la ligne horizontale précédente.

L'invention propose également un système d'impression, propre à imprimer un diagramme de pixels, présentant N couleurs définissant un système de codage de couleurs, sur une partie choisie d'un médium physique, et comprenant un dispositif de contrôle du type de celui présenté ci-avant.

Le système d'impression selon l'invention peut comporter d'autres caractéristiques qui peuvent être prises séparément ou en combinaison, et notamment :
- il peut comprendre des moyens de support propres à recevoir le médium physique dans une position désorientée d'un angle choisi, de sorte que la matrice soit constituée selon des lignes obliques inclinées de l'angle choisi (par rapport au support) et dans chacune desquelles tous les pixels présentent une même couleur ;
- il peut comprendre des moyens d'impression agencés pour effectuer les impressions de matrice par jets d'encre ou par offset ;
- le système de codage de couleurs peut être choisi parmi (au moins) le système (Rouge, Vert, Bleu) le système (Jaune, Magenta, Cyan), et une combinaison des deux systèmes précédents ;
- il peut comprendre des moyens d'altération agencés pour effectuer des impressions laser de pixels, de différents niveaux de gris, ou noirs, ou blancs, ou de couleurs déterminées, ou transparents dans des couches photosensibles du médium physique qui sont placées au-dessus de la matrice, et correspondant respectivement aux pixels de couleurs de la matrice.

### Brève description des dessins

D'autres caractéristiques et avantages de l'invention apparaîtront à l'examen de la description détaillée ci-après, et des dessins annexés, sur lesquels :
- la figure 1 illustre de façon schématique et fonctionnelle un exemple de système d'impression équipé d'un dispositif de contrôle selon l'invention,
- la figure 2 illustre de façon schématique, dans une vue en coupe transversale, un exemple de médium physique comportant une matrice de pixels définie avec un système d'impression du type de celui illustré sur la figure 1,
- la figure 3 illustre un exemple de matrice de pixels obtenu par déplacements « obliques » de premiers moyens d'impression par rapport à un médium physique non désorienté,
- la figure 4 illustre un exemple de matrice de pixels obtenu par déplacements « horizontaux » de premiers moyens d'impression par rapport à un médium physique désorienté, et
- la figure 5 illustre un exemple d'algorithme permettant de mettre en oeuvre un procédé d'impression de matrice de pixels selon l'invention dans un système d'impression du type de celui illustré sur la figure 1.

### Description détaillée

L'invention a notamment pour objet de proposer un procédé, et un dispositif de contrôle D associé, destinés à permettre l'impression d'une matrice MPC de pixels, présentant N couleurs définissant un système de codage de couleurs, sur une partie choisie PC d'un médium physique MP.

Dans ce qui suit, on considère à titre d'exemple non limitatif que le médium physique MP est une carte en matière plastique (ou synthétique) destinée à être personnalisée, comme par exemple une carte d'identité ou un badge. Mais l'invention n'est pas limitée à ce type de médium physique. Elle concerne en effet tout type de support sur lequel peut être au moins imprimée une matrice de pixels, éventuellement dans le but de permettre une personnalisation ultérieure. Il pourra donc s'agir d'une feuille ou d'une carte en matière plastique ou synthétique, ou en carton, ou encore en papier, et plus généralement tout autre type de support acceptant l'association de plusieurs couches sensibles destinées à permettre la réalisation d'une matrice de pixels (ou mire).

Par ailleurs, on considère dans ce qui suit, à titre d'exemple non limitatif, que la personnalisation consiste au moins à imprimer une reproduction en couleurs d'une photographie en couleurs d'un visage, définie par un fichier de données (par exemple de type « BMP »). Mais l'invention n'est pas limitée à ce type de personnalisation. Elle concerne en effet tout type de personnalisation consistant en l'impression sur un médium physique MP de signes alphanumériques et/ou d'une reproduction d'une photographie et/ou d'autres éléments graphiques afin qu'ils(elle) constitue(nt) un/des signes distinctifs.

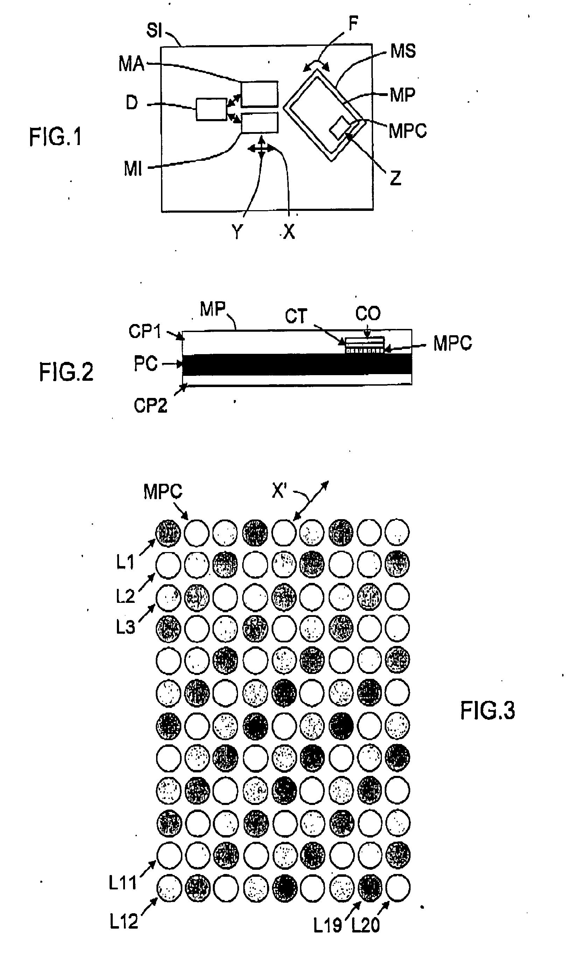

On a schématiquement illustré sur la figure 1 un exemple de système d'impression SI destiné à permettre au moins l'impression d'une matrice de M*P pixels, présentant N couleurs définissant un système de codage de couleurs, sur une partie choisie PC d'un médium physique MP (ici une carte en matière plastique). M désigne ici le nombre de lignes horizontales de la matrice MPC, alors que P désigne ici le nombre de pixels de couleurs (et donc le nombre de colonnes « verticales ») de cette même matrice MPC.

On considère dans ce qui suit, à titre d'exemple non limitatif, que le système de codage de couleurs est le système dit JMC (Jaune, Magenta, Cyan), ou en anglais YMC (Yellow, Magenta, Cyan). On a donc N = 3. Mais l'invention n'est pas limitée à ce type de système de codage de couleurs. Elle concerne en effet tout ensemble de N couleurs qui permettent de définir n'importe quelle couleur visible lorsqu'on les combine entre elles. Ainsi, il pourra également s'agir du système dit RVB (Rouge, Vert, Bleu), ou en anglais RGB (Red, Green, Blue), ou d'une combinaison des deux systèmes précités (JMC et RVB), ou encore d'une combinaison de couleurs permettant de couvrir l'espace de couleurs désiré.

Ce système d'impression SI comprend au moins des moyens de support MS, des moyens d'impression MI et un dispositif de contrôle D selon l'invention.

Les moyens de support MS sont agencés de manière à recevoir étroitement le médium physique MP afin qu'il puisse être positionné dans une position choisie. Pour une raison qui sera expliquée plus loin, il est préférable que les moyens de support MS puissent être entraînés en rotation, de façon contrôlée, afin de permettre le placement du médium physique MP dans une position désorientée d'un angle choisi (par exemple 45°, non limitativement) par rapport aux moyens d'impression MI.

Les moyens d'impression MI sont agencés pour effectuer les impressions des pixels de la matrice MPC. De préférence, ils effectuent leurs impressions par jets d'encre. Ces moyens d'impression MI sont solidarisés à des moyens de déplacement (non représentés) qui sont propres à les translater selon deux directions choisies X et Y, perpendiculaires entre elles. La direction X correspond ici à la direction des (M+P-1) lignes obliques Lj (avec j = 1 à M+P-1) de la matrice MPC, alors que la direction Y correspond ici à la direction de translation permettant de passer d'une ligne oblique Lj à une autre ligne oblique Lj' (avec j' = j+1).

On entend ici par « ligne oblique » une ligne droite qui est inclinée de 45° par rapport à une ligne horizontale d'une matrice MPC et qui commence au niveau d'un côté de cette matrice MPC et se termine au niveau d'un autre côté de cette matrice MPC, perpendiculaire au côté de début de ligne.

Le dispositif de contrôle D est destiné à contrôler les déplacements des moyens de déplacement des moyens d'impression MI. Il se présente par exemple sous la forme d'un calculateur faisant partie d'un ordinateur (ou analogue), ou bien sous la forme d'un ordinateur (ou analogue), ou encore sous la forme d'un module logiciel implanté dans un ordinateur (ou analogue). Par conséquent, il peut être réalisé sous la forme de modules logiciels (ou informatiques ou encore « software »), ou bien d'une combinaison de circuits électroniques (ou « hardware ») et de modules logiciels.

Comme illustré sur la figure 2, le médium physique MP est ici une carte qui, une fois terminée, mais avant sa personnalisation définitive, comprend un substrat PC, qui constitue ici une partie choisie dans une zone Z de laquelle doit être imprimée la matrice MPC, une première couche photosensible CT placée au-dessus de la matrice MPC, une seconde couche photosensible CO placée au-dessus de la première couche photosensible CT, une première couche de protection CP1 placée au-dessus du substrat PC et de la seconde couche photosensible CO, et une seconde couche de protection CP2 placée au-dessous du substrat PC. Des variantes de réalisation de cette carte personnalisable MP peuvent être envisagées par l'homme de l'art, et notamment celles qui sont décrites dans le document brevet WO 2011/045180.

La première couche photosensible CT pouvant être réalisée en même temps que la seconde couche photosensible CO, l'homme de l'art comprendra que ces couches CT et CO pourront être avantageusement regroupées en une seule couche dans la mesure où les composants réactifs aux différentes sources lasers sont compatibles. De même, il est possible de n'utiliser qu'une seule source laser pour effectuer deux types de personnalisation différents dans une seule et même couche (par exemple blanc ou noir en utilisant deux jeux de paramètres différents).

Dans l'exemple qui est ici décrit de façon non limitative, le substrat PC est réalisé en matière plastique, comme par exemple le PVC, l'ABS, une combinaison de PVC et d'ABS, le PC, le PET ou le PETG.

Par ailleurs, dans cet exemple, la première couche photosensible CT est opaque. Elle est par exemple réalisée en PMMA, et destinée à être altérée sélectivement par des moyens d'altération MA, qui se présentent sous la forme d'un second laser travaillant par exemple dans l'ultraviolet, afin de devenir localement transparente en des endroits prédéfinis correspondant à des pixels choisis de la matrice MPC.

De plus, dans cet exemple, la seconde couche photosensible CO est transparente. Elle est par exemple réalisée en PC (polycarbonate) dopé carbone. Par ailleurs, elle est destinée à être altérée sélectivement par des moyens d'altération MA, se présentant sous la forme d'un premier laser (par exemple de type Nd-YAG ou à fibres), afin de devenir localement opaque (différents niveaux de gris) en des endroits prédéfinis correspondant à des pixels choisis de la matrice MPC.

L'invention concerne principalement l'impression de la matrice MPC. Elle propose à cet effet de mettre en oeuvre dans un système d'impression SI, du type de celui décrit ci-avant, un procédé d'impression comprenant au moins une étape.

Cette étape consiste à imprimer dans la zone Z (ici du substrat PC) de la carte MP en au moins un passage des pixels de couleur suivant des lignes obliques Lj (avec j = 1 à M+P-1) par rapport au médium physique MP, les pixels d'une ligne oblique Lj présentant tous une même couleur choisie parmi les N couleurs et différente de celle qui est utilisée pour la ligne oblique précédente L(j-1), afin de générer une matrice MPC de M lignes (horizontales) comprenant chacune P pixels présentant les N couleurs successivement selon un ordre choisi, et dans laquelle chaque ligne (horizontale) autre que la première comprend un premier pixel qui est identique au deuxième pixel de la ligne (horizontale) précédente.

On a schématiquement illustré sur la figure 3 un exemple non limitatif de matrice M*P obtenu sans désorientation de la carte MP. Dans cet exemple, N = 3, M = 12, P = 9 et j = 1 à 20. L'ordre d'impression des trois couleurs (ici primaires) des pixels de chaque ligne (horizontale) est par exemple jaune (ou J, ici matérialisé en gris foncé), magenta (ou M, ici matérialisé en blanc) et cyan (ou C, ici matérialisé en gris clair).

Par exemple, et comme illustré non limitativement :
- les 9 pixels de la 1^{ère} ligne (horizontale) présentent respectivement les couleurs J, M, C, J, M, C, J, M, C,
- les 9 pixels de la 2^{ième} ligne (horizontale) présentent respectivement les couleurs M, C, J, M, C, J, M, C, J,
- les 9 pixels de la 3^{ième} ligne (horizontale) présentent respectivement les couleurs C, J, M, C, J, M, C, J, M, et ainsi de suite jusqu'à la 9^{ième} ligne (horizontale) dans laquelle les 9 pixels présentent respectivement les couleurs C, J, M, C, J, M, C, J, M.

On vérifie bien alors que :
- la 1^{ère} ligne oblique L1 comprend un unique pixel de couleur jaune (J),
- la 2^{ième} ligne oblique L2 comprend deux pixels de couleur magenta (M),
- la 3^{ième} ligne oblique L3 comprend trois pixels de couleur cyan (C), et ainsi de suite jusqu'à la 20^{ième} ligne oblique L20 qui comprend un unique pixel de couleur magenta (M).

On comprendra que pour générer cette matrice MPC rectangulaire alors que la carte MP n'est pas désorientée, il faut déplacer les moyens d'impression MI selon la direction oblique X' des lignes obliques Lj pour générer les pixels de même couleur d'une ligne oblique Lj, puis suivant une direction Y', perpendiculaire à la direction X', pour passer à la ligne oblique Lj' suivante (avec j' = j+1).

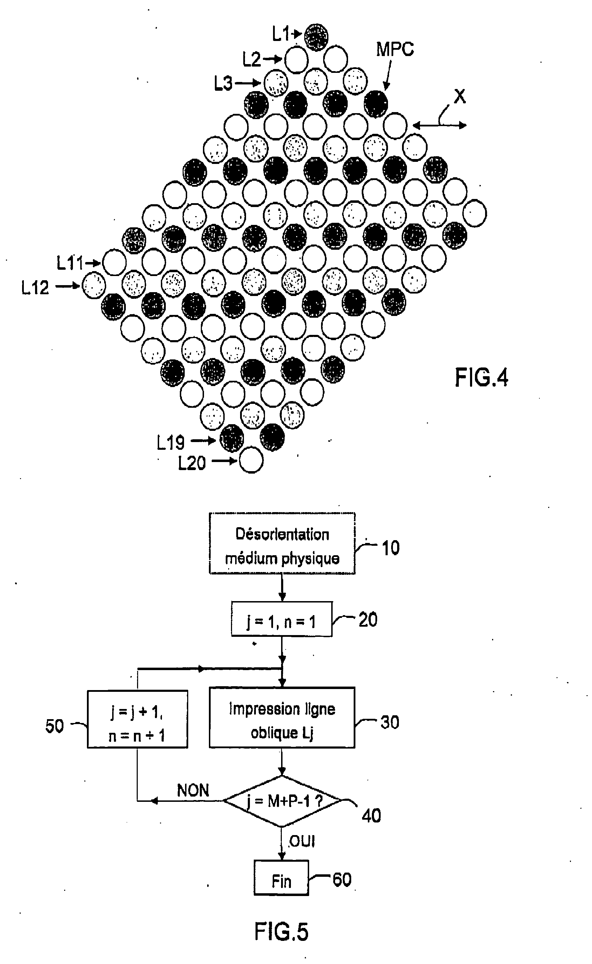

Dans une variante de réalisation illustrée sur la figure 4, et correspondant au système d'impression SI illustré sur la figure 1, on peut générer la matrice MPC rectangulaire après que la carte MP ait été désorientée d'un angle choisi par un entraînement en rotation sur cet angle choisi de ses moyens de support MS (flèche F), lors d'une étape préliminaire du procédé selon l'invention. Dans ce cas, les moyens d'impression MI sont déplacés selon la direction oblique X des lignes obliques Lj pour générer les pixels de même couleur d'une ligne oblique Lj, puis suivant la direction Y pour passer à la ligne oblique Lj' suivante (avec j' = j+1).

Par exemple et comme illustré non limitativement, l'angle choisi peut être égal à 45°.

Grâce à ce mode de génération de la matrice MPC, ligne oblique Lj' après ligne oblique Lj, les pixels de couleurs différentes appartenant à des lignes obliques voisines ne risquent plus de se recouvrir étant donné que les éventuelles erreurs de positionnement des pixels se font essentiellement suivant la direction oblique X (ou X') de déplacement, et non plus selon la direction des lignes horizontales. Il en résulte une uniformité des couleurs effectives des pixels.

On notera que le contrôle des déplacements des moyens d'impression MI est assuré par le dispositif de contrôle D au moyen d'ordres.

On a illustré sur la figure 5 un exemple non limitatif d'algorithme permettant de mettre en oeuvre un procédé d'impression d'une matrice MPC de pixels selon l'invention dans un système d'impression SI du type de celui décrit ci-avant en référence à la figure 1.

Cet algorithme commence par une éventuelle étape 10 dans laquelle on (par exemple le dispositif de contrôle D) ordonne l'entraînement en rotation sur l'angle choisi (par exemple 45°) (flèche F) des moyens de support MS qui supportent fixement la carte MP afin de la désorienter de cet angle choisi (par exemple 45°) par rapport à la direction X de déplacement des moyens d'impression MI.

Cet algorithme se poursuit par une étape 20 dans laquelle on (le dispositif de contrôle D) initialise un premier compteur associé à la première variable j représentant les lignes obliques Lj, et un second compteur associé à la seconde variable n représentant les N couleurs.

Puis, cet algorithme se poursuit par une étape 30 dans laquelle on (le dispositif de contrôle D) ordonne aux moyens de déplacement de positionner les moyens d'impression MI au niveau de la 1^{ère} ligne L1 afin d'imprimer l'unique pixel de cette dernière (L1) avec la 1^{ère} couleur (n = 1, par exemple le jaune).

Puis, cet algorithme se poursuit par une étape 40 dans laquelle on (le dispositif de contrôle D) effectue un test sur la valeur en cours de la première variable j. Si la valeur en cours de j est strictement inférieure à M+P-1, alors on (le dispositif de contrôle D) incrémente d'une unité les premier et second compteurs, puis on (le dispositif de contrôle D) effectue de nouveau l'étape 30 afin d'imprimer les pixels de la 2^{ème} ligne oblique L2 avec la 2^{ème} couleur (par exemple le magenta). Ensuite, on effectue de nouveau le test de l'étape 40.

On réitère ainsi les étapes 30 à 50, chaque fois avec des valeurs incrémentées d'une unité des premier et second compteurs jusqu'à ce que tous les pixels de la dernière ligne oblique L(M+P-1) aient été imprimés. Dans ce cas, le résultat du test de l'étape 40 indique que la valeur en cours de la première variable j est égale à M+P-1, et donc on (le dispositif de contrôle D) effectue une étape finale 60 consistant à replacer les moyens d'impression MI dans leur position de repos initiale.

On notera que le second compteur fonctionne modulo N.

On notera également que dans l'exemple d'algorithme décrit ci-avant, l'impression de la matrice MPC s'effectue ligne oblique Lj après ligne oblique Lj', et donc en plusieurs passages. Mais cette impression peut être réalisée ave un nombre de passage réduit, par exemple en imprimant plusieurs lignes de couleurs différentes en même temps. On comprendra que dans cette dernière hypothèse la réalisation complète de la matrice MPC nécessite K passages, où K est défini par la partie entière augmentée d'une unité de M divisé par le nombre de lignes obliques Lj imprimées par jet d'encre lors de chaque passage.

Par ailleurs, l'homme de l'art comprendra que l'utilisation d'un système d'impression à jets d'encres n'est pas limitative.

On notera également qu'un procédé similaire à celui décrit pour l'impression de la matrice MPC peut être avantageusement utilisé pour altérer les première CT et seconde CO couches photosensibles, lorsque cela est prévu dans le cadre d'une personnalisation d'une carte MP. Plus précisément, une fois qu'un masque (ou un algorithme par tête galvanométrique) d'exposition (généré à partir du fichier de données numériques qui définit l'image devant être imprimée sur la carte MP) a été très précisément placé au-dessus de la seconde couche photosensible CO d'une carte MP, on peut déplacer le second laser des moyens d'altération MA suivant la direction oblique X (ou X') afin d'exposer la seconde couche photosensible CO et ainsi définir des lignes obliques de pixels transparents en correspondance des pixels de la matrice MPC. Puis, on peut déplacer le premier laser des moyens d'altération MA suivant la direction oblique X (ou X') afin d'exposer la première couche photosensible CT et ainsi définir des lignes obliques de pixels de niveaux de gris choisis en correspondance des pixels de la matrice MPC. Au final, on obtient dans la zone Z de la carte MP une reproduction de l'image devant personnaliser la carte MP.

Grâce à ce mode d'altération, ligne oblique Lj' après ligne oblique Lj, les pixels transparents ou blancs ou à niveaux de gris différents ou noirs appartenant à des lignes obliques voisines ne risquent plus de se recouvrir de façon aléatoire, étant donné que leurs éventuelles erreurs de positionnement se font essentiellement suivant la direction oblique X (ou X'), et non plus selon la direction des lignes horizontales. Il en résulte une superposition plus précise sur les pixels de couleurs correspondants de la matrice MPC et donc une diminution notable des erreurs locales d'intensité et/ou de contraste et/ou colorimétrique sur l'image reproduite.

## Revendications

1. Procédé d'impression d'une matrice (MPC) de M*P pixels, présentant N couleurs définissant un système de codage de couleurs, sur une partie choisie (PC) d'un médium physique (MP), **caractérisé en ce qu'**il comprend une étape dans laquelle on imprime en au moins un passage des pixels de couleur suivant des lignes obliques par rapport audit médium physique (MP), les pixels d'une ligne oblique présentant tous une même couleur choisie parmi lesdites N couleurs et différente de celle utilisée pour la ligne oblique précédente, afin de générer une matrice (MPC) de M lignes horizontales comprenant chacune P pixels présentant lesdites N couleurs successivement selon un ordre choisi, avec une éventuelle répétition dudit ordre lorsque P est supérieur à N, et dans laquelle chaque ligne horizontale autre que la première comprend un premier pixel identique au deuxième pixel de la ligne horizontale précédente.

2. Procédé selon la revendication 1, **caractérisé en ce que** l'on prévoit une étape préliminaire dans laquelle on désoriente ledit médium physique (MP) d'un angle choisi de manière à constituer ladite matrice (MPC) selon des lignes obliques inclinées dudit angle choisi et dans chacune desquelles tous les pixels présentent une même couleur.

3. Procédé selon l'une des revendications 1 et 2, **caractérisé en ce que** l'on effectue lesdites impressions par jets d'encre.

4. Procédé selon l'une des revendications 1 et 2, **caractérisé en ce que** l'on effectue lesdites impressions par impression offset.

5. Procédé selon l'une des revendications 1 à 4, **caractérisé en ce que** ledit système de codage de couleurs est choisi dans un groupe comprenant au moins le système (Rouge, Vert, Bleu), le système (Jaune, Magenta, Cyan), et une combinaison des deux systèmes précédents.

6. Dispositif (D) de contrôle d'un système d'impression (SI) pour l'impression d'une matrice (MPC) de de M*P pixels, présentant N couleurs définissant un système de codage de couleurs, sur une partie choisie (PC) d'un médium physique (MP), **caractérisé en ce qu'**il est agencé pour ordonner audit système d'impression (SI) d'imprimer en au moins un passage des pixels de couleur suivant des lignes obliques par rapport audit médium physique (MP), les pixels d'une ligne oblique présentant tous une même couleur choisie parmi lesdites N couleurs et différente de celle utilisée pour la ligne oblique précédente, afin de générer une matrice (MPC) de M lignes horizontales comprenant chacune P pixels présentant lesdites N couleurs successivement selon un ordre choisi, avec une éventuelle répétition dudit ordre lorsque P est supérieur à N, et dans laquelle chaque ligne horizontale autre que la première comprend un premier pixel identique au deuxième pixel de la ligne horizontale précédente.

7. Système d'impression (SI) pour l'impression d'un diagramme de pixels, présentant N couleurs définissant un système de codage de couleurs, sur une partie choisie (PC) d'un médium physique (MP), **caractérisé en ce qu'**il comprend un dispositif de contrôle (D) selon la revendication précédente.

8. Système selon la revendication 7, **caractérisé en ce qu'**il comprend des moyens de support (MS) propres à recevoir ledit médium physique (MP) dans une position désorientée d'un angle choisi de sorte que ladite matrice (MPC) soit constituée selon des lignes obliques inclinées de cet angle choisi et dans chacune desquelles tous les pixels présentent une même couleur.

9. Système selon l'une des revendications 7 et 8, **caractérisé en ce qu'**il comprend des moyens d'impression (MI) agencés pour effectuer lesdites impressions par jets d'encre.

10. Système selon l'une des revendications 7 et 8, **caractérisé en ce qu'**il comprend des moyens d'impression (MI) agencés pour effectuer lesdites impressions par impression offset.

11. Système selon l'une des revendications 7 à 10, **caractérisé en ce que** ledit système de codage de couleurs est choisi dans un groupe comprenant au moins le système (Rouge, Vert, Bleu), le système (Jaune, Magenta, Cyan), et une combinaison des deux systèmes précédents.

12. Système selon l'une des revendications 7 à 11, **caractérisé en ce qu'**il comprend des moyens d'altération (MA) agencés pour effectuer des impressions laser de pixels, de différents niveaux de gris, ou noirs, ou blancs, ou transparents dans des couches photosensibles dudit médium physique (MP) qui sont placées au-dessus de ladite matrice (MPC), et correspondant respectivement auxdits pixels de couleurs de ladite matrice (MPC).
